# EUROPEAN PATENT SPECIFICATION

(11) **EP 3 141 851 B1**
(45) Date of publication and mention of the grant of the patent: **06.05.2020**
(21) Application number: 16162026.5
(22) Date of filing: 23.03.2016
(51) Int. Cl.: F25D 29/00, F25B 49/02

(54) **REFRIGERATOR WITH SELECTIVELY ACTIVABLE MICROPROCESSOR FOR AN INVERTER COMPRESSOR**
KÜHLSCHRANK MIT SELEKTIV AKTIVIERBAREM MIKROPROZESSOR FÜR EINEN INVERTERKOMPRESSOR
RÉFRIGÉRATEUR À MICROPROCESSEUR ACTIVÉ SÉLECTIVEMENT POUR UN COMPRESSEUR INVERTER

(30) Priority: 07.09.2015 KR 20150126592
(43) Date of publication of application: 15.03.2017
(73) Proprietor: LG Electronics Inc., Seoul 07336 (KR)
(72) Inventor: HU, Jinseok, 08592 Seoul (KR)
(74) Representative: Ter Meer Steinmeister & Partner

(56) References cited:
- EP-A1- 3 098 547
- EP-A2- 0 546 981
- WO-A2-2008/001227
- JP-A- 2000 356 447
- US-A- 5 262 704
- US-B1- 6 244 061

## Description

### CROSS-REFERENCE TO RELATED APPLICATION(S)

The present application claims the benefits of priority to Korean Patent Application No. 10-2015-0126592 filed on September 7, 2015.

### BACKGROUND

### 1. Field

The present disclosure relates to a refrigerator.

### 2. Background

Generally, a refrigerator is a home appliance, which may store food at low or controlled temperature inside of a storage space. A temperature of the storage space should be maintained at a set temperature. Accordingly, the inside of the storage space should be effectively sealed and cooling continued by supplying cool air using a refrigeration cycle.

One type of conventional refrigerator is a structured mechanical refrigerator, such as disclosed in Republic of Korea utility model publication No. 20-2000-0013309. Such mechanical refrigerator is generally equipped with a thermostat using a bimetal. The thermostat simultaneously functions as a sensor and a power switch to turn on and off of a compressor.

When a storage space temperature rises above a certain temperature, an AC power is supplied to the compressor to drive the refrigeration cycle, and when the temperature is equal to or less than a certain temperature, the AC power supply is blocked to stop an operation of the refrigeration cycle.

The mechanical refrigerator typically includes a reciprocating compressor using a non-variable-speed induction motor, and constant speed drive or stop is performed by turning a power on or off. Such configuration has an advantage of simplicity and low price formation; however, because of the constant speed induction motor, there is a disadvantage of failing to fulfill the improvement need for reducing power consumption.

EP 0 546 981 A2 describes an over temperature protection circuit for a poly-phase compressor motor. The motor 10 is driven by an inverter which provides a three- phase frequency and voltage controlled AC power to the compressor motor windings. Power transistors in the inverter are controlled by an inverter control. An output line for phase from the inverter contains a temperature sensitive overload protector to interrupt current flow through the phase W input to the motor when a predetermined temperature is reached.

WO 2008/001227 A2 describes a thermostat unit for controlling a variable speed compressor. The thermostat unit includes a microprocessor control unit and a switching module. The microprocessor control unit measures the ambient temperature of the controlled space with a thermistor.

US 5 262 704 A discloses an inverter for a portable refrigerator. The inverter includes a protection circuit which protects against locked rotor and overload current conditions, as well as a shut-off circuit to guard against operating at low speeds and completely draining the battery.

### SUMMARY

The objects of the present invention are solved by the features of the independent claim. According to an embodiment of the present disclosure, there is provided a mechanical refrigerator that includes a main body forming a storage space, an inverter compressor to compress a refrigerant, a microprocessor to control a drive operation of the compressor, a thermostat connected to a power supply and switched on or switched off based on a temperature of the storage space, a power detection circuit to switch on or off the microprocessor according to a status of the thermostat, the power detection circuit being electrically connected to the power supply and the thermostat, and a power circuit to provide power to the microprocessor to drive the compressor, the power circuit being connected to the power supply and the microprocessor.

The power detection circuit outputs a set voltage when the thermostat is on, and may output 0 V when the thermostat is off.

The microprocessor is activated by the output voltage of the power detection circuit.

The refrigerator further comprises a reset part to initialize the microprocessor, the reset part being operated by a voltage signal transmitted by the power detection circuit.

The power circuit may maintain a power supply status to the microprocessor.

When the microprocessor is activated by the power detection circuit, the microprocessor may control the drive of the compressor by the power supplied from the power circuit.

When the output voltage of the power detection circuit is 0 V, the microprocessor may be switched off.

The power detection circuit, the power circuit, and the microprocessor may be provided on a single printed circuit board.

The power detection circuit outputs a set voltage to the microprocessor when the thermostat is on, and output 0 V when the thermostat is off.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a side cross-sectional view of a mechanical refrigerator according to an embodiment of the present disclosure;
FIG. 2 is a block diagram showing a schematic configuration of the mechanical refrigerator; and
FIG. 3 is a drawing of a status of a power detection circuit and a microprocessor according to a status of a thermostat.

### DETAILED DESCRIPTION

Advantages, features, and methods for achieving those of embodiments may become apparent upon referring to embodiments described later in detail together with the attached drawings. However, embodiments are not limited to the embodiments disclosed hereinafter, but may be embodied in different modes. The same reference numbers may refer to the same elements throughout the specification.

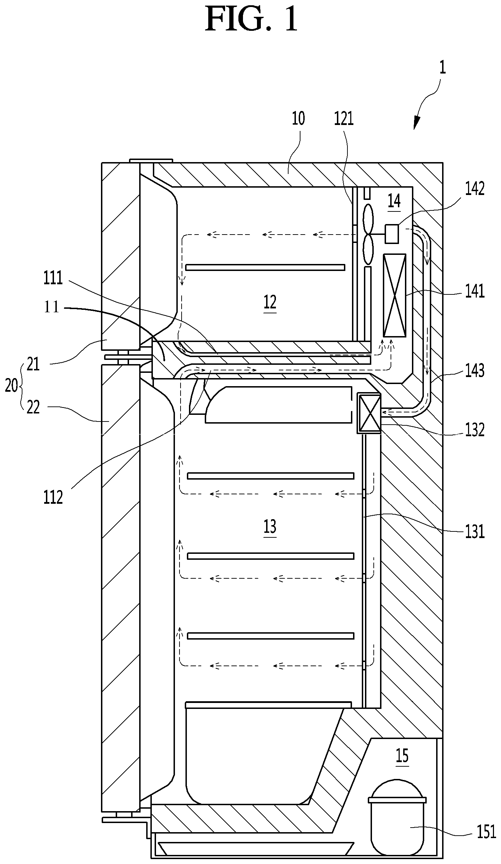

FIG. 1 is a side cross-sectional view of a mechanical refrigerator or refrigerator device according to an embodiment of the present disclosure. The embodiment shown in FIG. 1 is a top mount type refrigerator; however, it is understood that the invention is not limited thereto and can be applied to all types of mechanical refrigerators in which an inverter compressor may be used.

Referring to FIG. 1, a refrigerator 1 may include a cabinet 10 that forms a storage space and a door 20 to provide access to the storage space (e.g., open and close).

The storage space may include a freezing chamber 12 vertically partitioned by a barrier 11 and provided at an upper portion, and a refrigerating chamber 13 provided at a lower portion. A storage member, such as multiple drawers and shelves may be provided at an inside portion of the freezing chamber 12 and refrigerating chamber 13.

The door 20 may include a freezing chamber door 21 to provide access to the freezing chamber 12, and a refrigerating chamber door 22 to provide access to the refrigerating chamber 13. Each of the freezing chamber door 21 and refrigerating chamber door 22 may be rotatably installed at the cabinet 10, and configured to open and close each of the freezing chamber 12 and the refrigerating chamber 13 independently.

A heat exchange chamber 14 accommodating an evaporator 141 may formed at a rear portion of the freezing chamber 12. The freezing chamber 12 and the heat exchange chamber 14 may be separated by a grille pan 121. In addition, a blower fan 142 may be provided in the heat exchange chamber 14, and then cool air generated at the evaporator 141 may be forcibly circulated.

An outlet to connect the freezing chamber 12 and the heat exchange chamber 14 may be formed at the grille pan 121, Such configuration allows the air forcibly circulated by the blower fan 142 to be supplied to the freezing chamber 12.

A freezing chamber recovering passage 111 may be formed at an inside of the barrier 11. The freezing chamber recovering passage 111 allows the freezing chamber 12 and the heat exchange chamber 14 to be operatively connected each other, so that the air in the freezing chamber 12 can be returned to the heat exchange chamber 14. Such configuration allows the freezing chamber 12 to be cooled and maintained at a set temperature.

A supply duct 131 to supply cool air to the refrigerating chamber 13 is provided at a wall of the refrigerating chamber 13. The supply duct 131 may be connected to a supply passage 143 that is operatively connected with the heat exchange chamber 14. Therefore, when the blower fan 142 is driven, the cool air inside the heat exchange chamber 14 may be supplied to the supply duct 131 through the supply passage 143, and then supplied to an inside of the refrigerating chamber 13 through an outlet of the supply duct 131.

A damper 132 may be provided at the supply passage 143. The damper 132 may selectively open and close the supply passage 143 and supply the cool air into the refrigerating chamber 13.

A refrigerating chamber recovering passage 112 may be formed at the inside of the barrier 11. The refrigerating chamber recovering passage 112 allows the refrigerating chamber 13 and the heat exchange chamber 14 to be operatively connected with each other, and air of the refrigerating chamber 13 is returned to the heat exchange chamber 14 to be cooled again. By such a flow of the air, the refrigerating chamber 13 may be cooled and maintained at a set temperature.

A machine room 15 may be formed at a bottom end of the rear surface of the cabinet 10, which is partitioned from the storage space. A compressor 151 and parts constituting a freezing cycle including a condenser (not shown) may be provided inside the machine room 15. The compressor 151 and condenser may be configured to be cooled by the air of the room where the refrigerator 1 is installed (e.g., air that is external to the refrigerator)

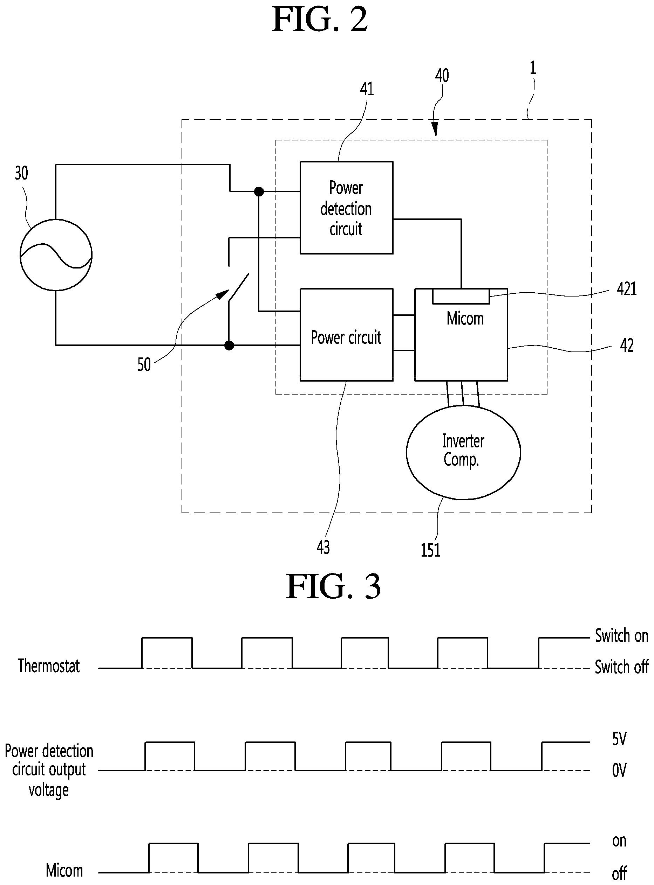

FIG. 2 is a block diagram showing a schematic configuration of the mechanical refrigerator according to an embodiment of the disclosure. Referring to FIG. 2, a thermostat 50 is provided at an inside of the storage space of the refrigerator 1. The thermostat 50 may be configured by a bimetal. The thermostat 50 may operate both as a temperature sensor in the refrigerator and a switch for determining the power supply for the drive of the compressor 151.

The thermostat 50 may be configured to enable controlling of the set temperature by a dial (not shown), which is provided in the refrigerator. The set temperature of each of the refrigerating chamber 13 and the freezing chamber 12 can be determined by operating the dial. It is understood that the invention is not limited to a dial-type control.

The thermostat 50 is connected to a power detection circuit 41 and an AC power 30, which may be understood as a power supply. According to a temperature change of the storage space, the power may be selectively supplied to the power detection circuit 41, and may activate a microprocessor 42 to drive the compressor 151.

In other words, if the storage space temperature deviates from the set temperature or temperature range, the thermostat 50 is switched on and activates the microprocessor 42 that controls the drive of the compressor 151. The microprocessor 42 then drives the compressor 151, and cools the storage space.

Alternatively, if the temperature of the storage space satisfies the set temperature or temperature range, the thermostat 50 is switched off and the microprocessor 42 controlling the drive of the compressor 151 is deactivated. As a result, the compressor 151 stops operating and cool air supply is stopped.

By repeating such a process, the storage space of the refrigerator 1 may maintain the set temperature or temperature range.

The compressor 151 is preferably an inverter compressor which is driven by a BLDC motor and a rotation speed of which may be varied according to a load. A separate printed circuit board (PCB) 40 may be required to control the drive of the inverter compressor.

The PCB 40 to control the compressor 151 may include a power detection circuit 41 to detect a status of the thermostat 50, a microprocessor 42 to provide precise inverter control of the compressor 151, and a power circuit 43 to supply power to the microprocessor 42.

Depending on the status of the thermostat 50, the power detection circuit 41 turns the microprocessor 42 on or off, and prevents the occurrence of a standby power for the microprocessor 42. That is, the power detection circuit 41 detects the status of the thermostat 50 and selectively outputs a voltage to the microprocessor 42.

The power detection circuit 41 may be connected to one side of the thermostat 50 and AC power 30, respectively. Accordingly, when the thermostat 50 is switched on, the power detection circuit 41 outputs a voltage of 5 V, and when the thermostat 50 is switched off, the power detection circuit 41 outputs a voltage of 0 V.

Thus, according to the status of the thermostat 50, the output voltage of the power detection circuit 41 is transmitted to the microprocessor 42, and the microprocessor 42 is to be selectively turned on and off. That is, when the power is not supplied by the power detection circuit 41, the microprocessor 42 maintains the off state, and when the power is supplied, the microprocessor 42 maintains an activated state for the drive control of the compressor 151.

Therefore, the microprocessor 42, which consumes significant standby power on the PCB 40, may maintain the off state when the power is not inputted. And when the thermostat 50 is switched on, the microprocessor 42 is on and activated by the power detection circuit 41, and therefore the microprocessor 42 does not the standby power. Therefore, compared to the PCB for a conventional inverter drive, the microprocessor 42 has an advantage of significantly reducing the power consumption.

Meanwhile, a reset part 421 may be provided at the microprocessor 42. The reset part 421 is connected to the power detection circuit 41 and may selectively initiate the microprocessor 42 by an output voltage signal transmitted from the power detection circuit 41.

The reset part 421 is operated by a voltage signal transmitted by the power detection circuit 41, and may initialize the setting of the microprocessor 42 to allow the driving of the compressor 151 to be made stably.

The power circuit 43 is connected to the microprocessor 42 and maintains a connection with the AC power 30. Therefore, the power, which has passed through the power circuit 43, may be supplied to the microprocessor 42

At this time, the AC power 30, the power circuit 43, and the microprocessor 42 maintain a state in which the power is always connected. However, according to the status of the thermostat 50, the microprocessor 42 may selectively supply the AC power 30 for driving the compressor 151. The AC power 30 is not driven when the microprocessor 42 is not activated, but maintains a connection with the microprocessor 42, and thus when the thermostat 50 is switched on and the AC power 30 is supplied, a momentary rush current is not generated.

Therefore, the microprocessor 42 has an advantage that even if a separate expensive negative temperature coefficient (NTC) for preventing the rush current and a relay for preventing a power consumption of the NTC resistance are omitted, damage to the PCB 40 due to repeated occurrence of the momentary rush current by the connection of AC power is prevented.

Meanwhile, the power circuit 43 may include one or more of an inverter rectifying part to rectify the AC voltage 30 to a DC voltage, a smoothing condenser to smooth the rectified AC voltage stably, and a converter part to transform the smoothed DC voltage to a pulse type of the AC voltage through fast switching.

FIG. 3 is a drawing of a status of a power detection circuit and a microprocessor according to a status of a thermostat according to an embodiment of the disclosure.

Referring to FIG. 3, when the internal temperature of the refrigerator 1 is not satisfied, the thermostat 50 is switched on. When the thermostat 50 is switched on, the power detection circuit 41 outputs a voltage of 5 V and transmits to the microprocessor 42. The reset part 421 of the microprocessor 42 initializes the microprocessor 42 by the voltage input from the power detection circuit 41. The microprocessor 42 is then switched on and activated. That is, the microprocessor 42 is able to control the compressor 151.

In this case, the power circuit 43 may maintain the connection with the AC power 30 for driving the compressor 151 in the microprocessor 42. Therefore, the compressor 151 may start the drive and the activation of the microprocessor 42 at the same time. The compressor 151 may adjust a capacity according to a load, and cooling of the storage space is provided by the drive of the compressor 151.

If the temperature of the storage space satisfies the set temperature or temperature range, the thermostat 50 is switched off. When the thermostat 50 is switched off, the power detection circuit 41 outputs a voltage of 0 V, and the microprocessor 42 is not activated and in the off state. According to the deactivation of the microprocessor 42, the compressor 151 stops driving and cooling of the storage space is terminated.

As this process repeats, the microprocessor 42 may be switched on/off by the power detection circuit 41, and then may maintain a set temperature by the thermostat 50.

A mechanical refrigerator according to the embodiments of the present disclosure has at least the following advantages over a conventional refrigerator.

First, the mechanical refrigerator may reduce power consumption by using an inverter compressor that is able to change a rotation speed, as compared to a conventional refrigerator.

Second, the mechanical refrigerator may include a microprocessor to control the inverter compressor that may be turned on/off by a power detection circuit connected to a power and a thermostat, whereby power is permanently connected to the microprocessor by a power circuit. Consequently, occurrence of a rush current at the microprocessor generated during input of the power may be prevented, and a separate NTC and relay can be omitted.

Third, the mechanical refrigerator may include a printed circuit board (PCB) to control the inverter compressor may be simply implemented without using an expensive component, and which results in a decreased production cost of the refrigerator.

Fourth, the mechanical refrigerator may include a reset part may be provided such that the microprocessor is activated, the reset part initializes the microprocessor. This results in a more reliable control of the inverter compressor than a conventional refrigerator. Although embodiments have been described with reference to a number of illustrative embodiments thereof, it will be understood by those skilled in the art that various changes in form and details may be made therein without departing from the scope of the disclosure as defined by the appended claims.

## Claims

1. A refrigerator (1) comprising:
a main body (10) forming a storage space (12, 13);
an inverter compressor (151) to compress a refrigerant;
a microprocessor (42) to control a drive operation of the compressor (151);
a thermostat (50) connected to a power supply (30) and switched on or switched off based on a temperature of the storage space (12, 13);
a power detection circuit (41) to switch on or off the microprocessor (42) according to a status of the thermostat (50), the power detection circuit (41) being electrically connected to the power supply (30) and the thermostat (50);
a power circuit (43) to provide power to the microprocessor (42) to drive the compressor (151), the power circuit (43) being connected to the power supply (30) and the microprocessor (42); and **characterized in that** the refrigerator further comprises
a reset part (421) connected to the power detection circuit (41),
wherein the power detection circuit (41) is configured to output a set voltage which is input to the reset part (421) when the thermostat (50) is switched on,
wherein the reset part (421) is configured to initialize and activate the microprocessor (42) with the voltage input from the power detection circuit (41), and
wherein, when the thermostat (50) is switched off, the power detection circuit (41) is configured to output a voltage of 0 V such that the microprocessor (42) is in an off-state to prevent an occurrence of a standby power for the microprocessor (42) by switching off the microprocessor (42).

2. The refrigerator of claim 1, wherein the power circuit (43) maintains a power supply status to the microprocessor (42).

3. The refrigerator of claim 1 or 2, wherein, when the microprocessor (42) is activated by the power detection circuit (41), the microprocessor (42) controls the drive of the compressor (151) by the power supplied from the power circuit (43).

4. The refrigerator of any one of the claims 1 to 3, wherein the power detection circuit (41), the power circuit (43), and the microprocessor (42) are provided on a single printed circuit board (40).

## Patentansprüche

1. Kühlschrank (1), der Folgendes umfasst:
einen Hauptkörper (10), der einen Vorratsraum (12, 13) bildet;
einen Wechselrichter-Kompressor (151), um ein Kühlmittel zu komprimieren;
einen Mikroprozessor (42), um einen Ansteuerbetrieb des Kompressors (151) zu steuern;
einen Thermostaten (50), der mit einer Stromversorgung (30) verbunden ist und auf der Basis einer Temperatur des Vorratsraums (12, 13) eingeschaltet oder ausgeschaltet wird;
eine Leistungsdetektionsschaltung (41), um den Mikroprozessor (42) in Übereinstimmung mit einem Status des Thermostaten (50) ein- oder auszuschalten, wobei die Leistungsdetektionsschaltung (41) mit der Stromversorgung (30) und dem Thermostaten (50) elektrisch verbunden ist;
einen Leistungskreis (43), um für den Mikroprozessor (42) Leistung zum Ansteuern des Kompressors (151) bereitzustellen, wobei der Leistungskreis (43) mit der Stromversorgung (30) und dem Mikroprozessor (42) verbunden ist; und
**dadurch gekennzeichnet, dass** der Kühlschrank ferner Folgendes umfasst:
ein Rücksetzelement (421), das mit der Leistungsdetektionsschaltung (41) verbunden ist,
wobei die Leistungsdetektionsschaltung (41) konfiguriert ist, eine eingestellte Spannung auszugeben, die bei dem Rücksetzelement (421) eingegeben wird, wenn der Thermostat (50) eingeschaltet wird,
wobei das Rücksetzelement (421) konfiguriert ist, den Mikroprozessor (42) mit der Spannung, die von der Leistungsdetektionsschaltung (41) eingegeben wird, zu initialisieren und zu aktivieren, und
wobei dann, wenn der Thermostat (50) ausgeschaltet wird, die Leistungsdetektionsschaltung (41) so konfiguriert ist, dass sie eine Spannung von 0 V ausgibt, so dass der Mikroprozessor (42) in einem Aus-Zustand ist, um das Auftreten einer Standby-Leistung für den Mikroprozessor (42) durch das Ausschalten des Mikroprozessors (42) zu verhindern.

2. Kühlschrank nach Anspruch 1, wobei der Leistungskreis (43) einen Leistungsversorgungsstatus für den Mikroprozessor (42) aufrechterhält.

3. Kühlschrank nach Anspruch 1 oder 2, wobei dann, wenn der Mikroprozessor (42) durch die Leistungsdetektionsschaltung (41) aktiviert wird, der Mikroprozessor (42) die Ansteuerung des Kompressors (151) durch die Leistung steuert, die von dem Leistungskreis (43) zugeführt wird.

4. Kühlschrank nach einem der Ansprüche 1 bis 3, wobei die Leistungsdetektionsschaltung (41), der Leistungskreis (43) und der Mikroprozessor (42) auf einer einzigen Leiterplatine (40) bereitgestellt sind.

## Revendications

1. Réfrigérateur (1) comportant :
un corps principal (10) formant un espace de stockage (12, 13) ;
un compresseur inverseur (151) pour comprimer un fluide frigorigène ;
un microprocesseur (42) pour commander une opération d'entraînement du compresseur (151) ;
un thermostat (50) relié à une alimentation (30) et passé à l'état passant ou à l'état bloqué sur la base d'une température de l'espace de stockage (12, 13) ;
un circuit de détection d'alimentation (41) pour passer à l'état passant ou à l'état bloqué le microprocesseur (42) en fonction d'un état du thermostat (50), le circuit de détection d'alimentation (41) étant électriquement relié à l'alimentation (30) et au thermostat (50) ;
un circuit d'alimentation (43) pour fournir de l'énergie au microprocesseur (42) pour entraîner le compresseur (151), le circuit d'alimentation (43) étant relié à l'alimentation (30) et au microprocesseur (42) ; et **caractérisé en ce que** le réfrigérateur comporte en outre
une partie de réinitialisation (421) reliée au circuit de détection d'alimentation (41),
dans lequel le circuit de détection d'alimentation (41) est configuré pour délivrer en sortie une tension réglée qui est appliquée à l'entrée de la partie de réinitialisation (421) lorsque le thermostat (50) est passé à l'état passant,
dans lequel la partie de réinitialisation (421) est configurée pour initialiser et activer le microprocesseur (42) avec la tension appliquée en entrée à partir du circuit de détection d'alimentation (41), et
dans lequel, lorsque le thermostat (50) est passé à l'état bloqué, le circuit de détection d'alimentation (41) est configuré pour délivrer en sortie une tension de 0 V de telle sorte que le microprocesseur (42) est dans un état inactif pour empêcher une occurrence d'une alimentation de réserve pour le microprocesseur (42) en passant le microprocesseur (42) à l'état bloqué.

2. Réfrigérateur selon la revendication 1, dans lequel le circuit d'alimentation (43) maintient un état d'alimentation jusqu'au microprocesseur (42).

3. Réfrigérateur selon la revendication 1 ou 2, dans lequel, lorsque le microprocesseur (42) est activé par le circuit de détection d'alimentation (41), le microprocesseur (42) commande l'entraînement du microprocesseur (151) par le courant délivré à partir du circuit d'alimentation (43).

4. Réfrigérateur selon l'une quelconque des revendications 1 à 3, dans lequel le circuit de détection d'alimentation (41), le circuit d'alimentation (43) et le microprocesseur (42) sont agencés sur une carte à circuit imprimé (40) unique.
